# EUROPEAN PATENT SPECIFICATION

(11) **EP 4 507 937 B1**
(45) Date of publication and mention of the grant of the patent: **10.06.2026**
(21) Application number: 23722448.0
(22) Date of filing: 14.04.2023
(51) Int. Cl.: B60T 11/26, B60T 17/06, B60T 17/22

(54) **BRAKE FLUID RESERVOIR**
BREMSFLÜSSIGKEITSBEHÄLTER
RÉSERVOIR DE LIQUIDE DE FREIN

(30) Priority: 14.04.2022 IT 202200007445
(43) Date of publication of application: 19.02.2025
(73) Proprietor: Brembo S.p.A., 24035 Curno (Bergamo) (IT)
(72) Inventor: GHERARDI, Pierangelo, 24035 CURNO, BERGAMO (IT); REGAZZONI, Mattia, 24035 CURNO, BERGAMO (IT); CARONIA, Marco, 24035 CURNO, BERGAMO (IT); PENATI, Daniele, 24035 CURNO, BERGAMO (IT)
(74) Representative: Di Biase, Fabio
(86) International application number: PCT/IB2023/053828
(87) International publication number: WO 2023/199278

(56) References cited:
- WO-A1-97/28031
- WO-A1-98/00321
- DE-A1- 19 523 946
- GB-A- 2 555 004
- US-A1- 2005 279 173

## Description

### . Field of the invention

**.** The present invention relates to a brake fluid reservoir, and in particular to a brake fluid reservoir for a racing motorcycle.

### . Background art

**.** Racing motorcycles are provided with a brake fluid reservoir.

**.** The brake fluid reservoir generally consists of a brake fluid receptacle, a diaphragm, and a membrane positioned inside the receptacle, and a screwable cap designed to allow opening and closing the receptacle.

**.** The brake fluid reservoir mainly serves two functions.

**.** The first function is to compensate for the wear of the friction materials in the braking system, such as brake pads and brake discs, by the brake fluid contained therein.

**.** The second function is to allow topping up with brake fluid during the first loading of the braking system and during the steps of bleeding.

**.** The brake fluid reservoir often needs to be opened for bleeding and topping up during the test sessions of a racing motorcycle.

**.** These operations, carried out in the pits during hectic race weekends, often cause the introduction of impurities and dirt into the brake fluid, which can cause a variety of problems to the braking system, and in more severe cases lead to braking system failure.

**.** Attempts have been made to address this critical issue by positioning a filter inside the brake fluid receptacle to prevent impurities from circulating in the braking system.

**.** However, such a solution does not prevent impurities from entering in the brake fluid reservoir during the bleeding operations.

**.** Moreover, such a known solution makes bleeding operations difficult, and in particular hinders the escape of air from the braking system. Furthermore, the progressive clogging of the filter makes it necessary to periodically inspect or replace the filter. WO9728031A1 discloses a charge pump fitted between a reservoir a and master cylinder pumping fluid via a return valve into a feed connection of the master cylinder. WO9800321A1 discloses a hydraulic braking system, the brake pressure generator of which has a compensating chamber connected to the pressure chamber via a central valve. DE19523946A1 discloses a precharging pump (28) situated between reservoir and master cylinder to deliver pressure medium into one or both of the feed connections to the master cylinder.

### . Solution

**.** It is the object of the present invention to provide a brake fluid reservoir, and in particular a brake fluid reservoir for a racing motorcycle, adapted to solve at least some of the drawbacks highlighted in the prior art.

**.** It is a particular object of the present invention to provide a brake fluid reservoir such that the ingress of impurities is prevented or minimized during the operations of topping up and bleeding the reservoir itself.

**.** It is a further particular object of the present invention to provide a brake fluid reservoir such that the operations of bleeding the reservoir itself are facilitated.

. These and other objects are achieved by a brake fluid reservoir according to the independent claim.

**.** The dependent claims relate to preferred and advantageous embodiments of the present invention.

### . Drawings

**.** In order to better understand the invention and appreciate the advantages thereof, some non-limiting exemplary embodiments thereof will be described below with reference to the accompanying drawings, in which:

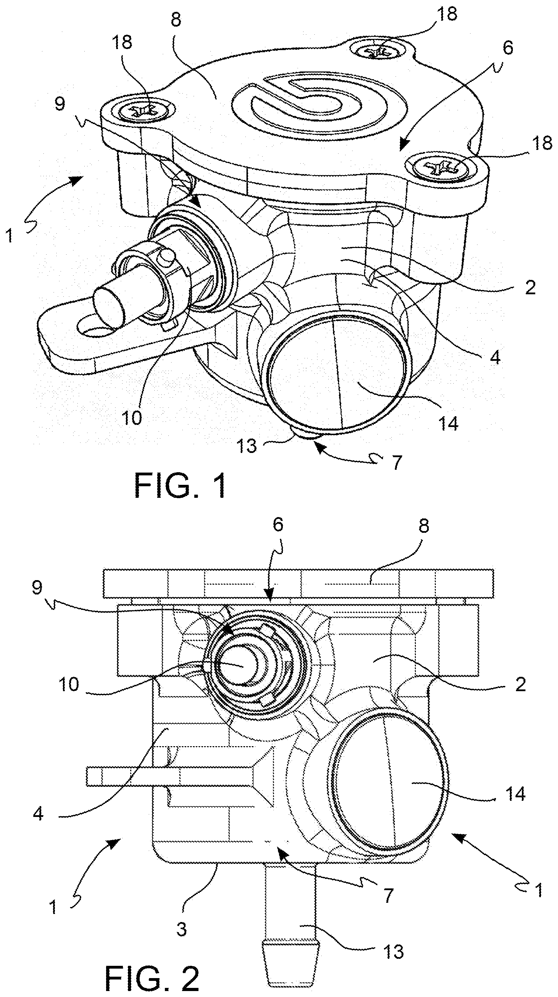

- figure 1 is a perspective view of a brake fluid reservoir, according to an embodiment of the invention;
- figure 2 is a side view of the brake fluid reservoir shown in figure 1;

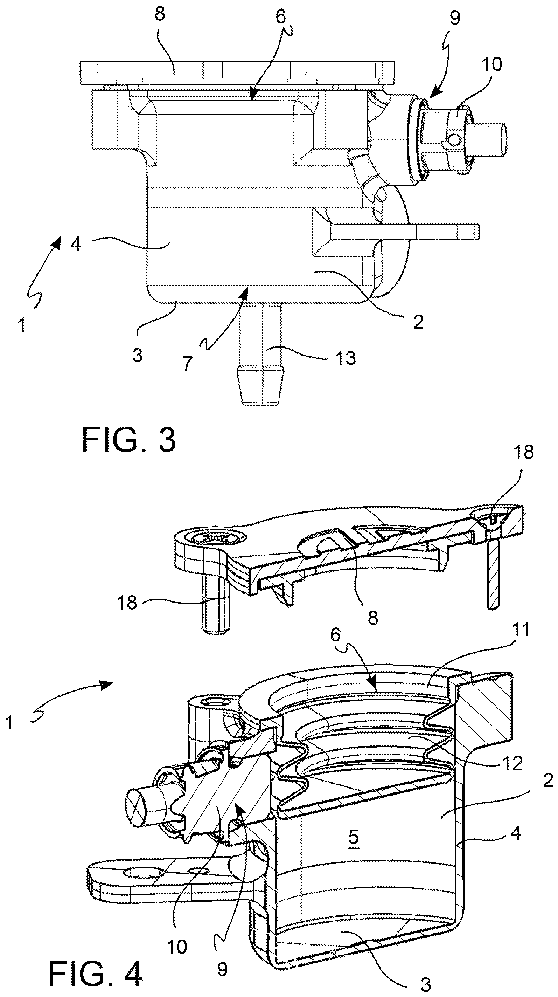

- figure 3 is a further side view of the brake fluid reservoir shown in figure 1;
- figure 4 is a longitudinal section view of a partially disassembled brake fluid reservoir, according to an embodiment of the invention;

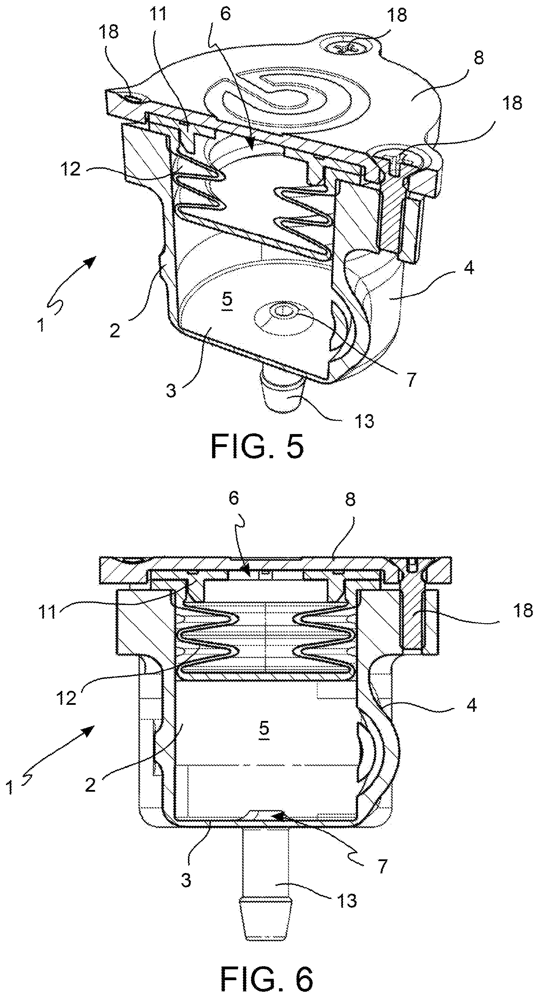

- figure 5 is a longitudinal section perspective view of a brake fluid reservoir, according to an embodiment of the invention;
- figure 6 is a longitudinal section side view of the brake fluid reservoir shown in figure 5;

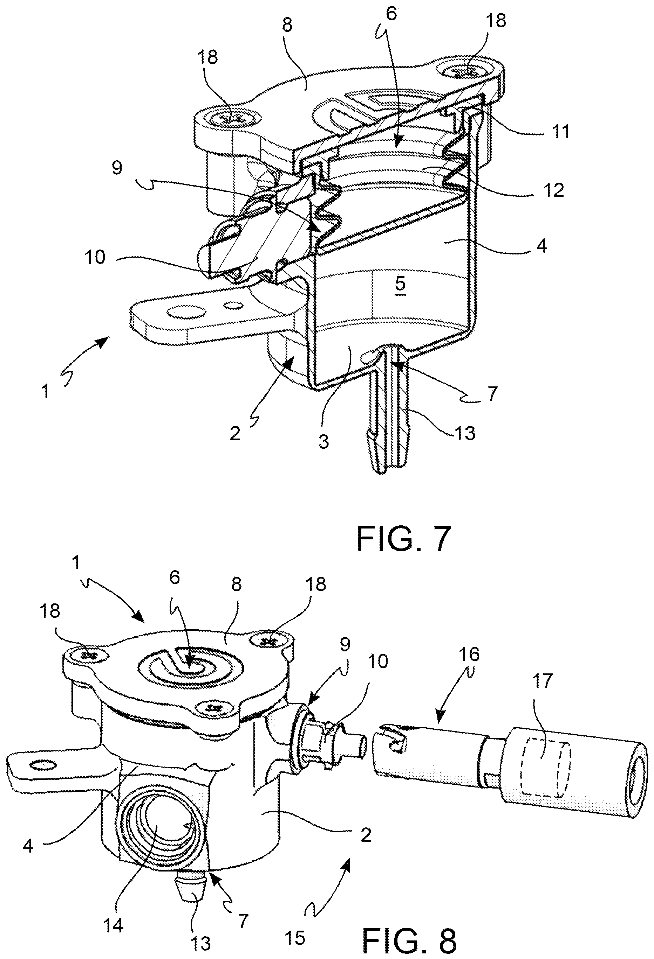

- figure 7 is a further longitudinal section perspective view of the brake fluid reservoir shown in figure 5;
- figure 8 is a perspective view of a brake fluid reservoir system, according to an embodiment of the invention;

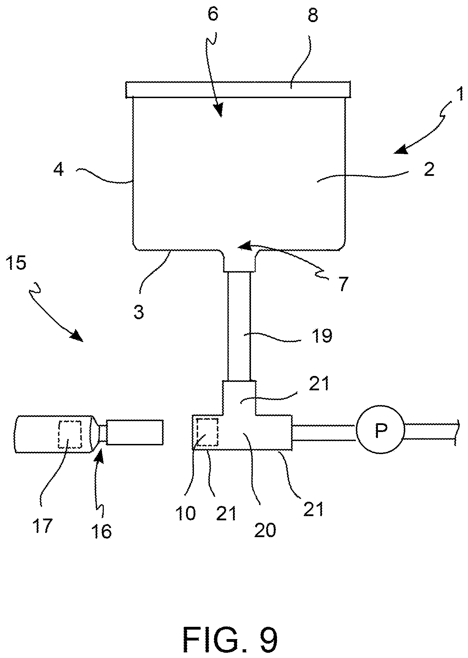

- figure 9 is a diagrammatic view of a brake fluid reservoir system according to a further embodiment of the invention.

### . Description of the figures

**.** With reference to the figures, a brake fluid reservoir is indicated by reference numeral 1.

The brake fluid reservoir 1 comprises a receptacle 2 adapted to contain the brake fluid.

**.** The receptacle 2 forms a bottom wall 3 and a perimetric wall 4.

**.** The bottom wall 3 and the perimetric wall 4 define an inner compartment 5 for containing the brake fluid.

**.** The perimetric wall 4 defines an inlet opening 6 opposite to the bottom wall 3 and communicating with the inner compartment 5.

**.** The bottom wall 3 defines an outlet opening 7 communicating with the inner compartment 5 and fluidically connectable to a pump of a braking system.

**.** The reservoir 1 further comprises a cap 8 configured to close the inlet opening 6.

**.** The reservoir 1 further comprises a pump inlet conduit 19 fluidically connected to the outlet opening 7 and extending in the opposite direction with respect to the inner compartment 5.

**.** According to an aspect of the invention, the reservoir 1 comprises a three-way component 20 comprising three channels 21 fluidically connected to one another.

**.** One of the three channels 21 of the three-way component 20 is connected to the pump inlet conduit 19.

**.** A second one of the three channels 21 of the three-way component 20 is connectable to the pump of the braking system.

**.** A third one of the three channels 21 comprises a valve 10 therein.

**.** The valve 10 is configured to regulate a flow of brake fluid through said third one of the three channels 21.

**.** The reservoir thus configured allows bleeding and loading the brake fluid through the valve 10 located in the three-way component 20, without exposing the brake fluid to the external environment and thus avoiding the contamination thereof. Indeed, when bleeding and loading the brake fluid inside the reservoir, the inlet opening remains closed.

**.** With further advantage, the receptacle 2 does not require oversizing to facilitate the brake fluid loading, as required instead by the reservoirs of the prior art. Therefore, the reservoir 1 thus configured has smaller dimensions than the reservoirs of the prior art and can be sized to contain only the amount of brake fluid needed to compensate for the wear of the friction materials of the braking system.

**.** According to an embodiment, the valve 10 is a proportional valve, or a quick-connect valve, or a Staubli type valve.

**.** According to an embodiment, the cap 8 is connected to the perimetric wall 4 by means of removable fastening means, preferably by means of threaded connection means 18.

**.** According to an embodiment, the reservoir 1 comprises a membrane 11 and a diaphragm 12, where the membrane 11 and the diaphragm 12 are positioned in the inner compartment 5 of the receptacle 2, under the cap 8, and where the membrane 11 and the diaphragm 12 are configured to form a tight seal at the cap 8 and prevent leakages of the brake fluid contained inside the inner compartment 5 of the reservoir 1 through the inlet opening 6.

**.** According to an embodiment, the receptacle 2 is made of polymer material or is made of metal material, preferably aluminum.

**.** According to an embodiment, the receptacle 2 comprises a porthole 14 positioned on the perimetric wall 4, configured to check the level of the brake fluid inside the receptacle 2.

**.** According to a further aspect of the invention, a brake fluid reservoir 15 system comprises a reservoir 1 as previously described and a delivery conduit 16.

**.** The delivery conduit 16 is configured to be fluidically connectable to the valve 10 in the reservoir 1 so that the brake fluid is conveyed into reservoir 1 by means of the valve 10 located in the three-way component 20.

**.** According to an embodiment, the delivery conduit 16 comprises a filter 17, where the filter 17 is configured to filter the brake fluid entering in the reservoir 1.

**.** Advantageously, the contamination of the brake fluid entering in the reservoir 1 is minimized by the filter 17.

**.** With further advantage, since the filter 17 is positioned inside the delivery conduit 16, and thus outside the reservoir 1 and disconnectable from the reservoir 1, the filter 17 does not interfere with the bleeding operations and does not hinder the leakage of air from the system 15. Indeed, during the bleeding operations, the delivery conduit 16 is disconnected from the valve 10, through which the brake fluid is bled, therefore the filter does not interfere with the bleeding operation.

**.** With further advantage, by means of the delivery conduit 16, the filtered brake fluid is introduced into the reservoir 1 without exposing the brake fluid to the external environment, thus minimizing the contamination thereof by external agents.

. Obviously, those skilled in the art will be able to make changes or adaptations to the present invention, without however departing from the scope of the following claims.

### LIST OF REFERENCE NUMERALS

- **1.**: Reservoir
- **2.**: Receptacle
- **3.**: Bottom wall
- **4.**: Perimetric wall
- **5.**: Inner compartment
- **6.**: Inlet opening
- **7.**: Outlet opening
- **8.**: Cap
- **9.**: Auxiliary opening
- **10.**: Valve
- **11.**: Membrane
- **12.**: Diaphragm
- **13.**: Outlet conduit
- **14.**: Porthole
- **15.**: Reservoir system
- **16.**: Delivery conduit
- **17.**: Filter
- **18.**: Threaded connection means
- **19.**: Pump inlet conduit
- **20.**: Three-way component
- **21.**: Channels

## Claims

1. A brake fluid reservoir (1) comprising:
- a receptacle (2), adapted to containing brake fluid, said receptacle (2) forming a bottom wall (3) and a perimetric wall (4), wherein the bottom wall (3) and the perimetric wall (4) define an inner compartment (5) for containing the braking fluid, wherein the perimetric wall (4) defines an inlet opening (6) opposite to the bottom wall (3) and communicating with the inner compartment (5) , and the bottom wall (3) defines an outlet opening (7) communicating with the inner compartment (5) and fluidically connectable with a braking system pump;
- a cap (8) configured to close the inlet opening (6);
- a pump inlet conduit (19) fluidically connected to the outlet opening (7) and is extended in the opposite direction to the inner compartment (5);
wherein the reservoir (1) comprises a three-way component (20) comprising three fluidically connected channels (21); wherein
- one of the three channels (21) of the three-way component (20) is connected to the pump inlet conduit (19);
- a second one of the three channels (21) of the three-way component (20) is connnectable to the braking system pump;
- a third one of the three channels (21) comprises a valve (10) therein; said valve (10) being configured to regulate a flow of braking fluid through said third of the three channels (21),
**characterized in that**
the brake fluid reservoir (1) is configured to allow bleeding and loading the brake fluid through the valve (10) located in the three-way component (20) without exposing the brake fluid to the external environment.

2. A reservoir (1) according to claim 1, wherein the valve (10) is a proportioning valve, a quick-connect valve, or a Staubli type valve.

3. A reservoir (1) according to one of the preceding claims, wherein the cap (8) is connected to the perimetric wall (4) by removable fastening means, preferably by means of threaded connection means (18).

4. A reservoir (1) according to one of the preceding claims, comprising a membrane (11) and a diaphragm (12), wherein the membrane (11) and the diaphragm (12) are positioned in the inner compartment (5) of the receptacle (2), below the cap (8), and wherein the membrane (11) and diaphragm (12) are configured to achieve a fluid-tight seal at the cap (8) and prevent leakage of the brake fluid contained within the inner compartment (5) of the reservoir (1) through the inlet opening (6).

5. A reservoir (1) according to one of the preceding claims, wherein the receptacle (2) is formed of polymeric material or is formed of metallic material, preferably aluminum,
and/or wherein the receptacle (2) comprises a porthole (14) positioned on the perimetric wall (4), configured to check the brake fluid level in the receptacle (2).

6. A brake fluid reservoir system (15), comprising a reservoir (1) according to any one of claims 1 to 5, and a delivery conduit (16), wherein the delivery conduit (16) is configured to be fluidically connectable to the valve (10) of the reservoir (1) so as to convey the brake fluid into the reservoir (1) through the valve (10) located in the three-way component (20).

7. A system (15) according to claim 6, wherein the delivery conduit (16) comprises a filter (17), wherein the filter (17) is configured to filter the brake fluid entering the reservoir (1).

## Patentansprüche

1. Bremsflüssigkeitsbehälter (1), umfassend:
- ein Behältnis (2), das zum Enthalten von Bremsflüssigkeit ausgelegt ist, wobei das Behältnis (2) eine Bodenwand (3) und eine Umfangswand (4) bildet, wobei die Bodenwand (3) und die Umfangswand (4) eine Innenkammer (5) zum Enthalten der Bremsflüssigkeit definieren, wobei die Umfangswand (4) eine Einlassöffnung (6) definiert, die der Bodenwand (3) gegenüberliegt und mit der Innenkammer (5) in Verbindung steht, und die Bodenwand (3) eine Auslassöffnung (7) definiert, die mit der Innenkammer (5) in Verbindung steht und mit einer Bremssystempumpe fluidtechnisch verbindbar ist;
- eine Verschlusskappe (8), die zum Verschließen der Einlassöffnung (6) konfiguriert ist;
- eine Pumpeneinlassleitung (19), die mit der Auslassöffnung (7) fluidtechnisch verbunden ist und sich in entgegengesetzter Richtung zu der Innenkammer (5) erstreckt;
wobei der Behälter (1) eine Dreiwege-Komponente (20) umfasst, die drei fluidtechnisch verbundene Kanäle (21) umfasst; wobei
- einer der drei Kanäle (21) der Dreiwege-Komponente (20) mit der Pumpeneinlassleitung (19) verbunden ist;
- ein zweiter der drei Kanäle (21) der Dreiwege-Komponente (20) mit der Bremssystempumpe verbindbar ist;
- ein dritter der drei Kanäle (21) ein Ventil (10) darin umfasst; wobei das Ventil (10) zum Regeln einer Strömung von Bremsflüssigkeit durch den dritten der drei Kanäle (21) konfiguriert ist,
**dadurch gekennzeichnet, dass** der Bremsflüssigkeitsbehälter (1) dazu konfiguriert ist, ein Ablassen und Einfüllen der Bremsflüssigkeit durch das Ventil (10) zuzulassen, das in der Dreiwege-Komponente (20) angeordnet ist, ohne die Bremsflüssigkeit der Außenumgebung auszusetzen.

2. Behälter (1) nach Anspruch 1, wobei das Ventil (10) ein Dosierventil, ein Schnellkupplungsventil oder ein Ventil vom Typ Stäubli ist.

3. Behälter (1) nach einem der vorhergehenden Ansprüche, wobei die Verschlusskappe (8) durch abnehmbare Befestigungsmittel, vorzugsweise mittels Gewindeverbindungsmitteln (18), mit der Umfangswand (4) verbunden ist.

4. Behälter (1) nach einem der vorhergehenden Ansprüche, der eine Membran (11) und ein Diaphragma (12) umfasst, wobei die Membran (11) und das Diaphragma (12) in der Innenkammer (5) des Behältnisses (2) unterhalb der Verschlusskappe (8) platziert sind und wobei die Membran (11) und das Diaphragma (12) dazu konfiguriert sind, eine flüssigkeitsdichte Abdichtung an der Verschlusskappe (8) zu schaffen und ein Austreten der in der Innenkammer (5) des Behälters (1) enthaltenen Bremsflüssigkeit durch die Einlassöffnung (6) zu verhindern.

5. Behälter (1) nach einem der vorhergehenden Ansprüche, wobei das Behältnis (2) aus einem Polymermaterial gebildet ist oder aus einem Metallmaterial, vorzugsweise Aluminium, gebildet ist, und/oder wobei das Behältnis (2) eine in der Umfangswand (4) positionierte Sichtöffnung (14) umfasst, die zum Prüfen des Bremsflüssigkeitsstands in dem Behältnis (2) konfiguriert ist.

6. Bremsflüssigkeitsbehältersystem (15), das einen Behälter (1) nach einem der Ansprüche 1 bis 5 und eine Zufuhrleitung (16) umfasst, wobei die Zufuhrleitung (16) dazu konfiguriert ist, mit dem Ventil (10) des Behälters (1) fluidtechnisch verbindbar zu sein, um die Bremsflüssigkeit durch das in der Dreiwege-Komponente (20) angeordnete Ventil (10) in den Behälter (1) zu befördern.

7. System (15) nach Anspruch 6, wobei die Zufuhrleitung (16) einen Filter (17) umfasst, wobei der Filter (17) zum Filtern der in den Behälter (1) eintretenden Bremsflüssigkeit konfiguriert ist.

## Revendications

1. Réservoir de liquide de frein (1) comprenant :
- un réceptacle (2), adapté pour contenir le liquide de frein, ledit réceptacle (2) formant une paroi inférieure (3) et une paroi périmétrique (4), dans lequel la paroi inférieure (3) et la paroi périmétrique (4) définissent un compartiment interne (5) pour contenir le liquide de frein, dans lequel la paroi périmétrique (4) définit une ouverture d'entrée (6) opposée à la paroi inférieure (3) et communiquant avec le compartiment interne (5), et la paroi inférieure (3) définit une ouverture de sortie (7) communiquant avec le compartiment interne (5) et reliable fluidiquement à une pompe de système de freinage ;
- un capuchon (8) configuré pour fermer l'ouverture d'entrée (6) ;
- un conduit d'entrée de pompe (19) relié fluidiquement à l'ouverture de sortie (7) et s'étendant dans la direction opposée au compartiment interne (5) ;
dans lequel le réservoir (1) comprend un composant à trois voies (20) comprenant trois canaux reliés fluidiquement (21) ; dans lequel
- un des trois canaux (21) du composant à trois voies (20) est relié au conduit d'entrée de pompe (19) ;
- un deuxième des trois canaux (21) du composant à trois voies (20) est reliable à la pompe de système de freinage ;
- un troisième des trois canaux (21) comprend une valve (10) à l'intérieur; ladite valve (10) étant configurée pour réguler un débit de liquide de frein à travers ledit troisième des trois canaux (21),
**caractérisé en ce que** le réservoir de liquide de frein (1) est configuré pour permettre la purge et le chargement du liquide de frein à travers la valve (10) située dans le composant à trois voies (20) sans exposer le liquide de frein à l'environnement extérieur.

2. Réservoir (1) selon la revendication 1, dans lequel la valve (10) est une valve de dosage, une valve à liaison rapide ou une valve de type Staubli.

3. Réservoir (1) selon l'une des revendications précédentes, dans lequel le capuchon (8) est relié à la paroi périmétrique (4) par des moyens de fixation amovibles, de préférence au moyen de moyens de liaison filetés (18).

4. Réservoir (1) selon l'une des revendications précédentes, comprenant une membrane (11) et un diaphragme (12), dans lequel la membrane (11) et le diaphragme (12) sont positionnés dans le compartiment interne (5) du réceptacle (2), en dessous du capuchon (8), et dans lequel la membrane (11) et le diaphragme (12) sont configurés pour réaliser un joint étanche aux fluides au niveau du capuchon (8) et empêcher une fuite de liquide de frein contenu dans le compartiment interne (5) du réservoir (1) à travers l'ouverture d'entrée (6).

5. Réservoir (1) selon l'une des revendications précédentes, dans lequel le réceptacle (2) est formé d'un matériau polymère ou est formé d'un matériau métallique, de préférence aluminium, et/ou dans lequel le réceptacle (2) comprend un hublot (14) positionné sur la paroi périmétrique (4), configuré pour vérifier le niveau de liquide de frein dans le réceptacle (2).

6. Système de réservoir de liquide de frein (15), comprenant un réservoir (1) selon l'une quelconque des revendications 1 à 5, et un conduit de distribution (16), dans lequel le conduit de distribution (16) est configuré pour être reliable fluidiquement à la valve (10) du réservoir (1) de manière à transporter le liquide de frein dans le réservoir (1) à travers la valve (10) située dans le composant à trois voies (20).

7. Système (15) selon la revendication 6, dans lequel le conduit de distribution (16) comprend un filtre (17), dans lequel le filtre (17) est configuré pour filtrer le liquide de frein entrant dans le réservoir (1).
